# EUROPEAN PATENT SPECIFICATION

(11) **EP 2 804 485 B1**
(45) Date of publication and mention of the grant of the patent: **18.05.2016**
(21) Application number: 12808369.8
(22) Date of filing: 18.12.2012
(51) Int. Cl.: A23F 3/16, A23F 3/06

(54) **PROCESS FOR MANUFACTURING TEA PRODUCTS**
VERFAHREN ZUR HERSTELLUNG VON TEEPRODUKTEN
PROCÉDÉ DE PRODUCTION DE PRODUITS DE THÉ

(30) Priority: 19.01.2012 EP 12151697
(43) Date of publication of application: 26.11.2014
(73) Proprietor: Unilever PLC, London, Greater London EC4Y 0DY (GB); Unilever N.V., 3013 AL Rotterdam (NL)
(72) Inventor: MUTAI, Felix Kipkorir, Kericho 20200 (KE); SHARP, David George, Bedford Bedfordshire MK44 1LQ (GB)
(74) Representative: Askew, Sarah Elizabeth
(86) International application number: PCT/EP2012/075954
(87) International publication number: WO 2013/107585

(56) References cited:
- WO-A1-2011/117075
- WO-A2-2009/059927
- GB-A- 968 423

## Description

### TECHNICAL FIELD OF THE INVENTION

The present invention relates to a process for manufacturing tea products. In particular, the invention relates to a process for manufacturing tea products from juice expressed from tea leaves withered to a specific range of moisture contents.

### BACKGROUND TO THE INVENTION

Beverages based on the tea plant *(Camellia sinensis)* have been popular throughout the world for many hundreds of years. Traditionally such beverages are produced by infusing leaf tea in hot water. Today such beverages can be prepared by more convenient methods which dispense with the need for manipulation of insoluble plant material by the end-user or consumer. In particular, the beverages can be prepared from instant powders, granules or liquid concentrates which can be conveniently dissolved and/or diluted in water.

Juice expressed from tea leaves (rather than extracted from leaves with a solvent) has been found to produce beverages having organoleptic properties different from those of produced from conventional liquid tea concentrates. WO 2009/059927 (Unilever) discloses a process for manufacturing one such tea juice which comprises the steps of: providing fresh tea leaves comprising catechins; macerating the fresh tea leaves thereby to produce dhool; fermenting the dhool for a fermentation time sufficient to reduce the content of catechins in the dhool to less than 50% of the content of catechins in the fresh tea leaves prior to maceration on a dry weight basis; and then expressing juice from the fermented dhool thereby to produce leaf residue and tea juice, wherein the amount of expressed juice is at least 50 ml per kg of the fresh tea leaves.

The tea juices described in WO 2009/059927 are especially attractive as beverage precursors owing to the minimal amount of processing required to produce them. In some instances however, it may be desirable to provide tea juice in a more concentrated form. However conventional methods of concentration, such as evaporation of solvent, involve intensive processing which may affect the organoleptic properties and/or the natural credentials of the juice. Therefore there remains a need for an improved method of producing concentrated tea juices.

### SUMMARY OF THE INVENTION

We have now found that by withering tea leaves to a specific degree before expression, juices are provided with exceptionally high amounts of tea solids without need for a separate concentration step. In addition the juices produced are relatively low in chlorogenic acids which may be a source of bitterness compared with juices produced by previous processes. Accordingly, in a first aspect the present invention provides a process for producing tea products, the process comprising the steps of:
a) withering fresh tea leaves to a moisture content of greater than 40% and less than 60% by weight;
b) expressing juice from the withered fresh tea leaves thereby to produce leaf residue and tea juice.

In a second aspect, the invention provides a tea juice obtainable by the process of the first aspect of the invention.

In a third aspect, the invention provides a beverage obtainable by diluting the tea juice of the second aspect.

### DETAILED DESCRIPTION

All amounts are by weight of the final composition, unless otherwise specified. It should be noted that in specifying any range of values, any particular upper value can be associated with any particular lower value.

As used herein the term "tea" means material from *Camellia sinensis* var. *sinensis* and/or *Camellia sinensis* var. *assamica.*

"Fresh tea leaves" refers to tea leaves and/or stem that have never been dried to a moisture content of less than 60% by weight. Fresh tea leaves usually have a moisture content of around 78 - 80%.

The conventional process for manufacturing tea consists of harvesting tea leaves, then withering them to lower their moisture content, then macerating the leaves into small pieces, followed by fermentation in the case of black or oolong tea, and finally drying to complete the removal of water.

Withering is typically carried out by placing the harvested tea leaves into large troughs, which may have a perforated base. The leaves are spread out so that they form a layer, typically around 200mm in depth. Contact between the leaf and air allows the moisture to be carried away. The leaves are typically allowed to dry for about 12 to 22 hours in the ambient conditions, after which the moisture content is reduced to around 72-74%. Lower moisture contents, down to around 68% may be achieved by spreading the leaves in thin layers and / or blowing air through the layers (through the perforations in the base of the trough). Withering allows certain chemical and biochemical changes to occur, which may increase the yield of the volatile flavour compounds in tea.

In the process of the invention, the fresh tea leaves are withered to a much greater extent that the conventional process, so that their water content is reduced to below 60%. Preferably the fresh tea leaves are withered to a moisture content of less than 57% by weight, preferably less than 55%. Preferably also the fresh tea leaves are withered to a moisture content of greater than 42% by weight, preferably greater than 45%. The extra reduction in moisture content can be achieved by spreading the leaves in a thinner layer than is conventionally used and / or blowing warm air through the layers and / or increasing the withering time.

The tea leaves may be macerated after withering. Maceration involves wounding the leaves e.g. by rolling and/or crushing the leaves to break down the plant tissue structure. In black tea manufacture this has the effect of liberating fermentable substrates and fermenting enzymes from within the plant cells and tissue. Maceration may be done by passing the fresh tea leaves through, for example, a CTC machine, rotorvane, ball mill, grinder, hammer mill, Lawri tea processor, Legg cutting machine, or tea rollers as in orthodox tea processing. Combinations of these maceration processes may also be used. Macerated tea leaves are referred to as dhool.

The tea leaves may be fermented after withering and before expression of the juice. Fermentation is the oxidative and hydrolytic process that tea undergoes when certain endogenous enzymes and substrates are brought together by mechanical disruption of the cells by maceration of the leaves. During this process colourless catechins in the leaves are converted to a complex mixture of yellow and orange to dark-brown polyphenolic substances. If the process does not include a fermentation step, then the tea juice can be used to produced a green (i.e. substantially unfermented) tea beverage. If the process does include a fermentation step, the expressed juice is at least partially fermented, and thus may be used to produce an oolong (i.e. partially fermented) tea product or a black (i.e. substantially fermented) tea beverage. Preferably the juice is used to produce a black tea beverage. The preferred fermentation temperature is from 10 to 40°C, more preferably from 15 to 25°C. Too low a temperature results in a slow rate of fermentation whilst too high a temperature may result in deactivation of oxidative enzymes and/or generation of unwanted reaction products.

In the next step of the process, juice is expressed from the withered fresh tea leaves thereby to produce leaf residue and tea juice. As a result of the withering step, the moisture content of the tea leaves immediately before expression is between 40 and 60% by weight. "Tea juice" refers to juice squeezed out from the withered tea leaves using physical force, as opposed to extracts produced by extraction of tea solids with the use of a solvent. Thus the term "expressing" encompasses such means as squeezing, pressing, wringing, spinning and extruding. Expression can be achieved in any convenient way so long as it allows for separation of the tea juice from the leaf residue. The machinery used to express the juice may, for example, be a hydraulic press, a pneumatic press, a screw press, a belt press, an extruder or a combination thereof.

The juice may be obtained in a single pressing or in multiple pressings. Preferably the juice is obtained from a single pressing as this allows for a simple and rapid process. In order to minimise degradation of the tea compounds, it is preferred that expression is performed at ambient temperature, for example from 5 to 40°C, more preferably 10 to 30°C. The time and pressure used in the expression step can be varied. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

Preferably no water is added to the fresh tea leaves during the expression step, so that the resulting juice is as concentrated as possible.

Preferably the amount of juice expressed is at least 10 ml per kg of fresh leaves, more preferably at least 20 ml, and most preferably at least 30 ml. The amount of expressed juice is preferably less than 200 ml per kg of fresh leaves, more preferably less than 150 ml, and most preferably less than 100 ml. When referring to the volume of juice expressed per unit mass of tea leaves it should be noted that the mass of the tea leaves is expressed on an "as is" basis and not a dry weight basis. Thus the mass includes any moisture in the leaves.

The tea juice contains a high concentration of soluble tea solids and is a valuable raw material for producing tea products. In particular it is preferable that the tea juice comprises soluble tea solids in an amount of at least 10% by weight of the composition, more preferably at least 12%, even more preferably at least 15%. Soluble tea solids levels as high as around 20% can be achieved by this process.

The total soluble solids content of the tea juice is measured by placing an accurately weighed sample in an oven at 100°C overnight to remove the water. The sample is then removed from the oven and reweighed.

After expression, the tea juice can be further concentrated by known concentration processes, e.g. evaporation, although in a preferred embodiment it is not further concentrated.

Chlorogenic acid and coumaric acid are present in tea juice produced by previous processes with conventional withering. These acids may be a source of bitterness. We have now found that the tea juice produced by the process of the invention is low in chlorogenic and coumaric acid, as compared with juices produced by previous processes. Thus preferably the tea solids in the tea juice of the invention contain less than 1.4% in total of chlorogenic and coumaric acid (by weight of the tea solids), preferably from 0.9 to 1.3%.

The content of the chlorogenic and coumaric acids in the tea juice is determined as follows. The samples of expressed tea juice are initially diluted with water prior to clean up using Reverse Phase C18 solid phase cartridges to isolate chlorogenic and coumaric acid. The isolated acids are recovered and separated by HPLC using a RP-HPLC column maintained at 30°C and eluted with a mixture of 2% acetic acid in water and 2% acetic in acetonitrile. The eluted acids are monitored at 310 and 325nm. The signals are verified by using UV spectra (diode array detector) and comparisons of the retention times with reference compounds. Quantification is carried out using an external calibration of chlorogenic and coumaric acid.

The tea juice is suitable for dilution with an aqueous liquid, preferably water, to provide a beverage. As used herein the term "beverage" refers to a substantially aqueous drinkable composition suitable for human consumption. Preferably the beverage comprises at least 85% water by weight of the beverage, more preferably at least 90% and most preferably from 95 to 99.9%. Preferably the tea juice is substantially the only source of tea solids in the beverage.

Since the tea juice is rich in tea solids, it can be diluted many-fold whilst still imparting tea flavour to the resulting beverage. Thus the tea juice is preferably diluted by a factor of at least 20 by weight, more preferably by a factor of at least 40 and most preferably by a factor of at least 60.

The mass of a single serve of the beverage may be, for example, less than 600 g, more preferably less than 350 g, more preferably still less than 250 g and most preferably from 20 to 150 g. The pH of the beverage may, for example, be from 2.5 to 8, more preferably 3 to 6, most preferably from 3.5 to 6. The beverage may comprise a food grade acid and/or salt thereof such as citric, malic, ascorbic acid or a mixture thereof. The beverage is preferably packaged. The package will typically be a bottle, can, carton or pouch. The beverage is preferably sanitised e.g. by pasteurisation or sterilisation.

### EXAMPLES

Fresh Kenyan tea leaves of *Camellia sinensis* var. *assamica* were placed in withering troughs. Air was passed through the bed of leaves until the leaves had withered to one of three different moisture contents: 73% (standard wither), 68% and 50%.

The withered leaves were then passed through a rotorvane followed by passing through a CTC (cut, tear, curl) machine with 4 teeth per inch (TPI) and a further pass through a CTC machine with 6 TPI. After one hour, the resulting dhool was passed through a ball breaker and fermented for another hour. After fermentation, the dhool was pressed in a Vincent CP4 press operating at 20 rpm with a back pressure of between 3 bar and 4.6 bar, depending on the moisture content of the dhool (higher back pressures for lower moisture contents).

The resulting juices were analysed and the results are given in the table below:

| Sample | Moisture content after wither (%wt) | Solid content of juice (%wt) | Total chlorogenic and coumaric acid content of tea solids (wt %) |
|---|---|---|---|
| 1 | 73 | 3.6 | 1.65 |
| 2 | 68 | 5.2 | 1.50 |
| 3 | 50 | 15.4 | 1.19 |

These results show that sample 3, which had been subjected to the harshest wither, had the highest solids content in the juice and the lowest proportion of chlorogenic and coumaric acid in the solids.

## Claims

1. A process for producing tea products, the process comprising the steps of:
a) withering fresh tea leaves to a moisture content of greater than 40% and less than 60% by weight;
b) expressing juice from the withered fresh tea leaves thereby to produce leaf residue and tea juice.

2. The process as claimed in claim 1 wherein in step (a) the fresh tea leaves are withered to a moisture content of less than 57% by weight.

3. The process as claimed in claim 2 wherein in step (a) the fresh tea leaves are withered to a moisture content of less than 55% by weight.

4. The process as claimed in any of claims 1 to 3 wherein in step (a) the fresh tea leaves are withered to a moisture content of greater than 42% by weight.

5. The process as claimed in claim 4 wherein in step (a) the fresh tea leaves are withered to a moisture content of greater than 45% by weight.

6. The process as claimed in any one of the preceding claims wherein the amount of tea juice expressed in step (b) is at least 10 ml per kg of fresh tea leaves.

7. A tea juice obtainable by the process of any one of the preceding claims.

8. The tea juice of claim 7 wherein the juice comprises tea solids in an amount of at least 10% by weight.

9. The tea juice of claim 8 wherein the juice comprises tea solids in an amount of from 12 to 20% by weight.

10. A beverage obtainable by diluting the tea juice of claim 7, 8 or 9.

11. The tea juice or beverage as claimed in any one of claims 7 to 10 comprising tea solids and wherein the tea solids comprise less than 1.4% in total of chlorogenic and coumaric acid by weight of the tea solids.

12. The tea juice or beverage as claimed in claim 11 wherein the tea solids comprise from 0.9 to 1.3% in total of chlorogenic and coumaric acid by weight of the tea solids.

13. A beverage comprising tea juice wherein the beverage comprises tea solids and wherein the tea solids comprise less than 1.4% in total of chlorogenic and coumaric acid by weight of the tea solids.

14. A beverage according to claim 13 wherein the tea solids comprise from 0.9 to 1.3% in total of chlorogenic and coumaric acid by weight of the tea solids.

## Patentansprüche

1. Verfahren zur Herstellung von Teeprodukten, wobei das Verfahren die Schritte umfasst:
a) Welken von frischen Teeblättern auf einen Feuchtigkeitsgehalt von mehr als 40 Gewichts-% und weniger als 60 Gewichts-%,
b) Auspressen von Saft aus den gewelkten frischen Teeblättern, um dadurch Blattrückstand und Teesaft herzustellen.

2. Verfahren nach Anspruch 1, wobei die frischen Teeblätter im Schritt (a) auf einen Feuchtigkeitsgehalt von weniger als 57 Gewichts-% gewelkt werden.

3. Verfahren nach Anspruch 2, wobei die frischen Teeblätter im Schritt (a) auf einen Feuchtigkeitsgehalt von weniger als 55 Gewichts-% gewelkt werden.

4. Verfahren nach irgendeinem der Ansprüche 1 bis 3, wobei die frischen Teeblätter im Schritt (a) auf einen Feuchtigkeitsgehalt von mehr als 42 Gewichts-% gewelkt werden.

5. Verfahren nach Anspruch 4, wobei die frischen Teeblätter im Schritt (a) auf einen Feuchtigkeitsgehalt von mehr als 45 Gewichts-% gewelkt werden.

6. Verfahren nach irgendeinem der vorhergehenden Ansprüche, wobei die Menge des in Schritt (b) ausgepressten Teesaftes mindestens 10 ml pro kg der frischen Teeblätter beträgt.

7. Teesaft, erhältlich durch das Verfahren nach irgendeinem der vorhergehenden Ansprüche.

8. Teesaft nach Anspruch 7, wobei der Saft Teefeststoffe in einer Menge von mindestens 10 Gewichts-% umfasst.

9. Teesaft nach Anspruch 8, wobei der Saft Teefeststoffe in einer Menge von 12 bis 20 Gewichts-% umfasst.

10. Getränk, erhältlich durch Verdünnen des Teesaftes nach Anspruch 7, 8 oder 9.

11. Teesaft oder Getränk nach irgendeinem der Ansprüche 7 bis 10, umfassend Teefeststoffe und wobei die Teefeststoffe weniger als 1,4 Gewichts-% der Teefeststoffe gesamte Chlorogensäure und Coumarsäure umfassen.

12. Teesaft oder Getränk nach Anspruch 11, wobei die Teefeststoffe 0,9 bis 1,3 Gewichts-% der Teefeststoffe gesamte Chlorogensäure und Coumarsäure umfassen.

13. Getränk, umfassend Teesaft, wobei das Getränk Teefeststoffe umfasst und wobei die Teefeststoffe weniger als 1,4 Gewichts-% der Teefeststoffe gesamte Chlorogensäure und Coumarsäure umfassen.

14. Getränk nach Anspruch 13, wobei die Teefeststoffe 0,9 bis 1,3 Gewichts-% der Teefeststoffe gesamte Chlorogensäure und Coumarsäure umfassen.

## Revendications

1. Procédé de production de produits de thé, le procédé comprenant les étapes :
a) de séchage à l'air de feuilles de thé fraiches jusqu'à une teneur en humidité supérieure à 40 % et inférieure à 60 % en masse ;
b) d'expression de jus à partir des feuilles de thé fraiches séchées à l'air pour produire par-là un résidu de feuilles et du jus de thé.

2. Procédé selon la revendication 1, dans lequel dans l'étape (a) les feuilles de thé fraiches sont séchées à l'air jusqu'à une teneur en humidité inférieure à 57 % en masse.

3. Procédé selon la revendication 2, dans lequel dans l'étape (a) les feuilles de thé fraiches sont séchées à l'air jusqu'à une teneur en humidité inférieure à 55 % en masse.

4. Procédé selon l'une quelconque des revendications 1 à 3, dans lequel dans l'étape (a) les feuilles de thé fraiches sont séchées à l'air jusqu'à une teneur en humidité supérieure à 42 % en masse.

5. Procédé selon la revendication 4, dans lequel dans l'étape (a) les feuilles de thé fraiches sont séchées à l'air jusqu'à une teneur en humidité supérieure à 45 % en masse.

6. Procédé selon l'une quelconque des revendications précédentes, dans lequel la quantité de jus de thé exprimé dans l'étape (b) est d'au moins 10 ml par kg de feuilles de thé fraiches.

7. Jus de thé pouvant être obtenu par le procédé selon l'une quelconque des revendications précédentes.

8. Jus de thé selon la revendication 7, dans lequel le jus comprend des matières solides de thé dans une quantité d'au moins 10 % en masse.

9. Jus de thé selon la revendication 8, dans lequel le jus comprend des matières solides de thé dans une quantité de 12 à 20 % en masse.

10. Boisson pouvant être obtenue par dilution du jus de thé selon la revendication 7, 8 ou 9.

11. Jus ou boisson de thé selon l'une quelconque des revendications 7 à 10 comprenant des matières solides de thé et dans lequel les matières solides de thé comprennent moins de 1,4 % au total d'acide chlorogénique et coumarique en masse des matières solides de thé.

12. Jus ou boisson de thé selon la revendication 11, dans lequel les matières solides de thé comprennent de 0,9 à 1,3 % au total d'acide chlorogénique et coumarique en masse des matières solides de thé.

13. Boisson comprenant du jus de thé, dans laquelle la boisson comprend des matières solides de thé et dans laquelle les matières solides de thé comprennent moins de 1,4 % au total d'acide chlorogénique et coumarique en masse des matières solides de thé.

14. Boisson selon la revendication 13, dans laquelle les matières solides de thé comprennent de 0,9 à 1,3 % au total d'acide chlorogénique et coumarique en masse des matières solides de thé.
